# FASCICULE DE BREVET EUROPEEN

(11) **EP 2 304 386 B1**
(45) Date de publication et mention de la délivrance du brevet: **09.10.2013**
(21) Numéro de dépôt: 09781444.6
(22) Date de dépôt: 03.08.2009
(51) Int. Cl.: G01B 11/16, H01Q 1/28, H01Q 3/26, H01Q 15/14, H01Q 21/06

(54) **CAPTEUR POLARIMÉTRIQUE POUR LA MESURE DE LA DÉFORMATION SUBIE PAR UNE SURFACE**
POLARIMETRISCHER SENSOR ZUR MESSUNG DER DEFORMATION EINER OBERFLÄCHE
POLARMETRIC SENSOR FOR MEASURING THE DEFORMATION UNDERGONE BY A SURFACE

(30) Priorité: 01.08.2008 FR 0804411
(43) Date de publication de la demande: 06.04.2011
(73) Titulaire: THALES, 92200 Neuilly-sur-Seine (FR); Centre National de la Recherche Scientifique, 75016 Paris (FR)
(72) Inventeur: LESUEUR, Guilllaume, F-91400 Orsay (FR); MERLET, Thomas, F-91410 Dourdan (FR); QUEGUINER, Morgan, F-91410 Saint Cyr sous Dourdan (FR); GILLES, Hervé, F-14670 Bures sur Dives (FR); GIRARD, Sylvain, F-14790 Verson (FR)
(74) Mandataire: Lucas, Laurent Jacques
(86) Numéro de dépôt international: PCT/EP2009/060057
(87) Numéro de publication internationale: WO 2010/012843

(56) Documents cités:
- EP-A- 0 869 331
- FR-A- 2 818 812
- US-A- 5 137 353

## Description

La présente invention concerne le domaine général de la métrologie et plus particulièrement celui relatif aux mesures des déformations subies par des structures de grandes dimensions exposées à des conditions environnementales (atmosphériques, climatiques ou encore vibratoires) susceptibles d'altérer leur planéité. Elle concerne plus spécifiquement le suivi en temps réel du comportement mécanique de grandes structures et notamment la mesure des déformations mécaniques affectant la surface rayonnante d'une antenne à balayage électronique.

L'objet de l'invention s'inscrit dans une démarche générale consistant à chercher des solutions permettant d'alléger les structures mécaniques qui supportent les antennes à balayage électronique. Cet allègement a pour conséquence de diminuer la rigidité de ces structures et leur résistance à la déformation. Le problème général consiste alors à garantir aux antennes réalisées à partir de structures allégées, des performances radioélectriques comparables sinon identiques à celle des antennes montées sur des structures conventionnelles plus rigides.

La présente invention s'inscrit dans la continuité de l'invention objet la demande de brevet français 07 07858 intitulée "Capteur optique pour mesurer la déformation au cours du temps d'une surface plane déformable" déposée par la demanderesse le 9/11/2007. Elle propose une solution alternative à celle proposée dans cette demande antérieure.

On rappelle ici que le problème général posé consiste à proposer un moyen permettant de connaître à tout instant l'état de déformation d'une structure, en particulier d'une structure présentant une face ou une surface sensiblement plane, autrement dit permettant de déterminer la déformée de la surface considérée en tout point de cette surface. Plus spécifiquement le problème posé consiste à rendre possible la réalisation sur une structure mécanique allégée et moins coûteuse qu'une structure rigide classique, une antenne à balayage électronique présentant des performances radioélectriques satisfaisantes. Autrement dit, le problème consiste à trouver un moyen de déterminer à tout instant la correction de la commande d'amplitude et de phase à appliquer à chacune des sources constituant l'antenne pour compenser l'effet sur le diagramme de rayonnement des variations de planéité présentées par la surface rayonnante de l'antenne. Le moyen proposé ne doit en outre pas perturber le diagramme de rayonnement de l'antenne.

On rappelle ici que la solution exposée dans la demande FR 07 07858 consiste à réaliser un plan optique de référence localisé initialement à une distance d au-dessus de la surface dont on souhaite contrôler la déformation, plan qui couvre toute cette surface, et à disposer sur la surface considérée des capteurs permettant de déterminer, à l'instant considéré, la distance du plan optique de référence à la surface contrôlée, à l'endroit où se situe le capteur. Pour ce faire, on utilise outre des moyens pour générer le plan optique de référence, des capteurs optiques linéiques répartis sur la surface contrôlée. Chaque capteur est configuré et agencé de façon à intercepter le faisceau optique matérialisant le plan de référence et à fournir à des moyens de traitement un signal fonction de la zone du capteur ayant intercepté le faisceau optique et donc de la distance du plan optique de référence à la surface considérée. Ainsi, si la surface contrôlée subit une déformation au niveau d'un capteur, la zone du capteur qui intercepte le faisceau formant le plan optique de référence change ce qui entraine une modification correspondante du signal fourni par ce capteur. Par suite la variation du signal délivré par le capteur traduit la déformation subie par la surface au point considéré.

Un but de l'invention est de proposer un moyen alternatif aux moyens connus, permettant de mesurer les variations de planéité présentées au cours du temps par une surface plane déformable.

Un autre but de l'invention est de proposer un moyen applicable, en particulier, au cas où la surface plane considérée est la surface rayonnante d'une antenne à balayage électronique.

Un autre but de l'invention est encore, comme il a été dit précédemment, de proposer une solution alternative à celle proposée dans la demande FR 07 07858.

A cet effet l'invention a pour objet un dispositif pour contrôler les déformations subies par une structure présentant une surface sensiblement plane, qui comporte:
- des moyens pour produire une nappe lumineuse d'épaisseur E, s'étendant au-dessus de la surface,
- des capteurs d'ondes lumineuses disposés en différents points de la structure, agencés de façon à intercepter l'onde lumineuse constituant la nappe et configurés pour détecter cette onde lumineuse.
Selon l'invention, la nappe lumineuse produite présente un axe de polarisation dont l'orientation varie suivant l'épaisseur E. Chaque sonde est par ailleurs configurée pour transformer l'onde lumineuse captée en deux ondes lumineuses présentant des polarités orthogonales et dont les intensités sont fonction de la polarité de l'onde détectée.

Selon un mode de réalisation particulier du dispositif, chaque capteur est constitué par une sonde optique passive apte à produire deux ondes lumineuses présentant des polarités orthogonales, séparées spatialement, la sonde étant associée à deux fibres optiques, l'ensemble étant agencé de façon à ce que l'une des fibres optiques transporte une des ondes produites par la sonde et que l'autre fibre transporte l'autre onde produite.

Dans une variante de ce mode de réalisation, la sonde optique passive est constituée par une lame séparatrice de polarisation.

Selon un autre mode de réalisation particulier du dispositif, chaque sonde comporte une fibre optique à maintien de polarisation agencée de façon à intercepter la nappe et associée à une sonde optique passive apte à produire deux ondes lumineuses présentant des polarités orthogonales, séparables spatialement.

Dans un mode de réalisation particulier, les moyens pour produire la nappe lumineuse, comportent une source émettant un faisceau laser cylindrique sur un élément en quartz ayant la forme d'un cône, suivant une direction parallèle à l'axe optique de cet élément, l'élément en quartz étant réalisé de façon à ce que la hauteur du cône soit parallèle à l'axe optique du matériau, ainsi qu'un miroir conique aligné avec cet élément, l'ensemble produisant une nappe lumineuse d'épaisseur E constante sur toute la surface de la structure.

Dans un autre mode de réalisation particulier, les moyens pour produire la nappe lumineuse comportent une source émettant un faisceau laser conique sur la base d'un élément en quartz ayant la forme d'un cône, l'élément en quartz étant réalisé de façon à ce que la hauteur du cône soit parallèle à l'axe optique du matériau, ainsi qu'un miroir conique aligné avec cet élément, l'ensemble produisant une nappe lumineuse dont l'épaisseur E varie en fonction de la distance considérée à l'origine de la nappe.

Dans un autre mode de réalisation particulier, les moyens pour produire la nappe lumineuse comportent une source émettant un faisceau laser conique sur une matrice plane de cristaux liquides, ainsi qu'un miroir conique aligné avec cet élément, l'ensemble produisant une nappe lumineuse dont l'épaisseur E varie en fonction de la distance considérée à l'origine de la nappe.

Dans un autre mode de réalisation particulier, les moyens pour produire la nappe lumineuse comportent une source émettant un faisceau laser conique sur une lame de matériau micro/nano structuré, ainsi qu'un miroir conique aligné avec cet élément, l'ensemble produisant une nappe lumineuse dont l'épaisseur E varie en fonction de la distance considérée à l'origine de la nappe.

Dans ces trois derniers modes de réalisation particuliers, l'agencement de chaque capteur est fonction de sa position sur la surface de la structure.

Le dispositif selon l'invention présente l'avantage de mettre en oeuvre des capteurs dont la structure est simple et l'encombrement réduit

Les caractéristiques et avantages de l'invention seront mieux appréciés grâce à la description qui suit, description qui expose l'invention au travers de modes de réalisation particuliers pris comme exemples non limitatifs et qui s'appuie sur les figures annexées qui présentent:
- la figure 1, un schéma de principe du dispositif selon l'invention;
- la figure 2, une illustration schématique d'un mode de réalisation du dispositif selon l'invention;
- la figure 3, une illustration schématique d'un second mode de réalisation du dispositif selon l'invention;
- la figure 4, une illustration schématique d'un premier mode de réalisation des moyens selon l'invention pour produire une nappe lumineuse de référence, à polarisation tournante, dont l'épaisseur est constante.
- la figure 5, une illustration schématique d'un second mode de réalisation des moyens selon l'invention pour produire une nappe lumineuse de référence, à axe de polarisation tournant dont l'épaisseur varie en fonction de la position du point d'observation par rapport à une référence donnée;

Dans la suite de la description, on prend comme exemple d'application, non limitatif de la portée de l'invention, la mesure des déformations subies par une antenne à balayage électronique dont les sources sont disposées sur une structure présentant initialement, à la fabrication, une surface sensiblement plane sur laquelle sont disposées les sources.

On rappelle à titre préliminaire que l'analyse mécanique des déformations d'une structure d'antenne montre qu'il existe généralement, pour une structure donnée, un nombre limité de déformées caractéristiques qui correspondent en particulier aux modes propres de vibration de l'antenne (fréquences propres entre 0-100Hz notamment), aux déformées dues au vent, aux masses additionnelles (glace, neige) et aux gradients thermiques. Par conséquent, la mesure absolue du déplacement transverse de la surface contrôlée, en un nombre limité de points disposés de façon sélective sur la surface, suffit à calculer la déformée globale de l'antenne. Le nombre de points de mesure requis, 5 ou 6 points pour une surface de quelques m² typiquement, est par ailleurs fonction de la forme et de la taille de la surface, ainsi que de la rigidité de la structure. Il détermine la résolution de la déformée ainsi déduite. L'agencement des points de mesure peut en outre être déterminé par le calcul ou la simulation.

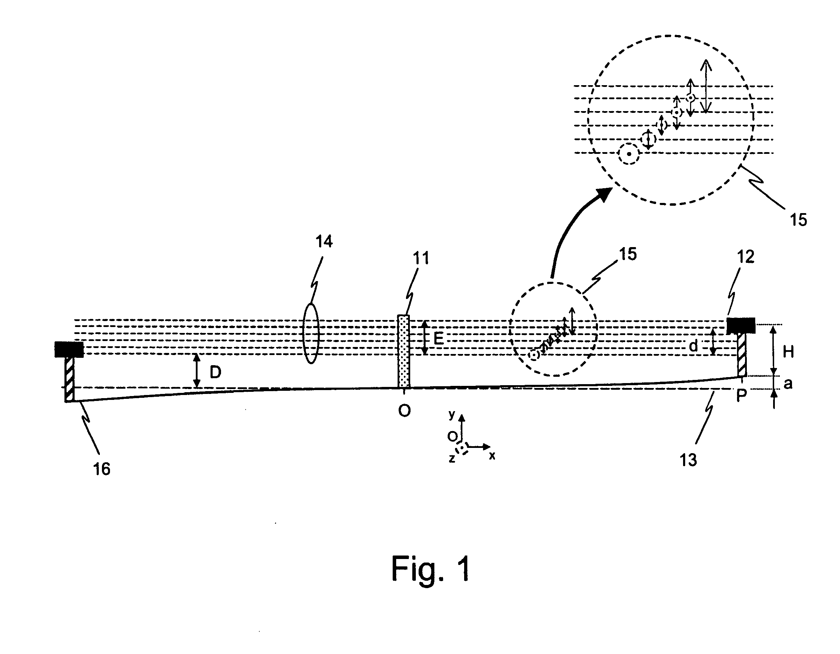

On considère la figure 1.

Le principe de fonctionnement du dispositif selon l'invention consiste à projeter parallèlement au-dessus de la surface à contrôler une nappe laser épaisse 14, d'une épaisseur E, valant de quelques mm à quelques cm suivant l'application, dont l'orientation de l'axe de polarisation varie, linéairement par exemple, selon l'axe Oy. Ainsi l'espace situé au-dessus de la surface contrôlée, est partiellement codé sur une épaisseur E, selon l'axe Oy représenté sur la figure. Le codage est réalisé grâce à la polarisation de l'onde lumineuse formant la nappe 14.

Selon l'invention, le dispositif comporte des moyens 12 pour intercepter et capter l'onde lumineuse formant la nappe 14, fixés en différents endroits donnés de la surface contrôlée sont agencés de façon à intercepter la nappe lumineuse 14 à une distance donnée H, fixe, au-dessus de la surface 16. Ces moyens 12 sont associés à des moyens capables de détecter l'état de polarisation de l'onde lumineuse interceptée. De la sorte, connaissant la distance H à laquelle se situent, par rapport à la surface 16, les moyens 12 pour capter l'onde lumineuse, on peut avantageusement déterminer l'amplitude de la déformation de la surface 16 à l'endroit auquel sont attachés les moyens de capture 12, pour peu que l'on dispose d'une référence absolue de position 13. Cette référence de position 13 peut par exemple être le plan initialement matérialisé par la surface 16 avant déformation, plan défini par les axes Ox et Oz sur la figure1, la nappe lumineuse 14 étant déployée à une distance D de ce plan. Le point O qui matérialise l'endroit où sont positionnés les moyens pour former la nappe lumineuse 14 est par ailleurs positionné de façon à constituer une origine fixe. Il est par exemple situé en un point de la surface contrôlée 16 correspondant a priori à un noeud de déformation déterminé par le calcul ou par simulation.

Ainsi, grâce à l'arrangement de moyen selon l'invention, il est avantageusement possible, en déterminant l'état de polarisation de l'onde formant la nappe lumineuse 14 au point d'interception, de déterminer la position de ce point sur l'axe Oy, position donnée par la somme D+d et par suite l'amplitude a de la déformation qui affecte la surface 16 au point P où le moyen de capture 12 est positionné. Autrement dit, en réalisant un codage de l'espace situé au-dessus de la surface contrôlée 16, la production d'une nappe lumineuse de référence 14 présentant un axe de polarisation tournant, dont la rotation est illustrée dans l'encadré 15 de la figure 1, permet avantageusement déterminer la déformée de la surface contrôlée.

La nature des moyens permettant d'une part de réaliser une nappe lumineuse de référence 14 présentant un axe de polarisation tournant et des moyens permettant d'autre part d'intercepter et de détecter l'état de polarisation de l'onde lumineuse formant la nappe 14, peut différer d'un mode de réalisation à l'autre du dispositif selon l'invention. De même l'agencement de ces moyens peut varier suivant la nature de la surface contrôlée. Dans la suite de la description on présente, à titre d'exemples non limitatifs, différents modes de réalisation et d'agencement de ces moyens.

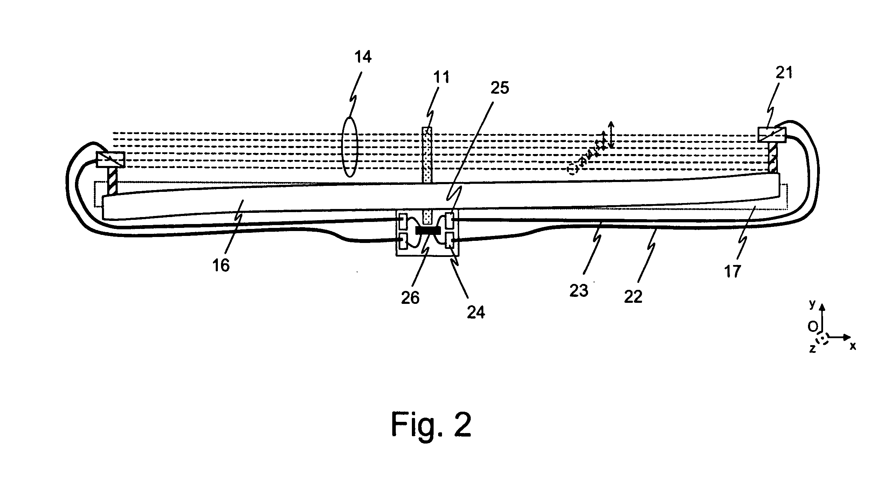

On considère d'abord la figure 2 qui présente un mode de réalisation du dispositif selon l'invention adapté à l'analyse des déformations subies par la surface rayonnante d'une antenne radar.

Dans ce mode de réalisation, les moyens pour intercepter l'onde lumineuse constituant la nappe de référence 14 et pour analyser l'état de polarisation comporte des sondes passives 21, séparatrices de polarisation, qui transforment l'onde lumineuse captée en deux ondes lumineuses présentant des polarités orthogonales et dont les intensités extraites ou émergentes sont fonction de la polarité de l'onde captée. Ces sondes sont positionnées de manière fixe au-dessus de la surface de l'antenne à des endroits déterminés et agencés de façon à être toujours placées dans la zone éclairée par la nappe lumineuse 14 quelle que soit la déformation subie par la surface à l'endroit considéré.

Les sondes 21 délivrent ainsi deux ondes lumineuses présentant des polarisations orthogonales entre elles qui sont transmises par l'intermédiaire de fibres optiques 22 et 23 à deux photodétecteurs 24 et 25 qui délivrent deux signaux électriques dont les intensités I₁ et I₂ sont fonction de l'orientation θ de l'axe de polarisation de l'onde lumineuse captée par la sonde 21 par rapport aux deux axes de polarisation de cette sonde. Les signaux électriques ainsi produits sont transmis à des moyens de traitement 26 qui déterminent la position de la sonde 21 dans la nappe lumineuse 14 à partir des valeurs relatives des intensités de ces signaux. De cette position est déduite l'amplitude, a, de la déformation subie par la surface contrôlée 16 à l'endroit correspondant au capteur considéré.

En pratique, les sondes 21 peuvent être réalisées au moyen de différents dispositifs connus par ailleurs pour leurs propriétés séparatrices de polarisation. Ils peuvent être constitués par exemple par des prismes de type Glan-Thompson, ou encore par des lames séparatrices de polarisation.

Les fibres optiques 22 et 23 utilisées ici peuvent être de nature quelconque. L'utilisation de fibres optiques plastique est ici cependant privilégiée, celles-ci présentant une ouverture numérique plus importante que les fibres optiques en silice classiques, de sorte que le montage des fibres 22 et 23 sur la sonde 21 est plus simple.

Ce premier mode de réalisation peut avantageusement être utilisé pour mesurer la déformation du plan rayonnant d'une antenne. En effet les sondes séparatrices de polarisation 21 mis en oeuvre sont ici constituées d'éléments diélectriques passifs, de petite taille, qui ne perturbent pas le champ électromagnétique présent à la surface de l'antenne et qui ne sont pas non plus susceptibles d'être perturbés par ce champ. Le nombre de sondes 21 que l'on peut disposer à la surface de l'antenne n'est donc en pratique pas un facteur limitant, de sorte qu'il est donc possible de placer un nombre de sondes suffisant pour déterminer la déformée de la surface de l'antenne sans causer de perturbations. En outre l'utilisation de fibres optiques pour transporter les ondes lumineuses produites par une sonde 21 permettent de déporter les photodétecteurs 24 et 25 dans une zone extérieure, située par exemple en arrière du plan rayonnant de l'antenne. De la sorte la conversion des ondes lumineuses fournie par une sonde 21 en signaux électriques n'est pas non plus de nature à perturber le champ électromagnétique présent à la surface de l'antenne. Ce mode de réalisation du dispositif selon l'invention, quoique étant utilisable pour des applications variées, apparaît donc comme particulièrement adapté à la mesure en temps réel, de la déformation subie par une antenne radar, alors même que celle-ci est en fonctionnement.

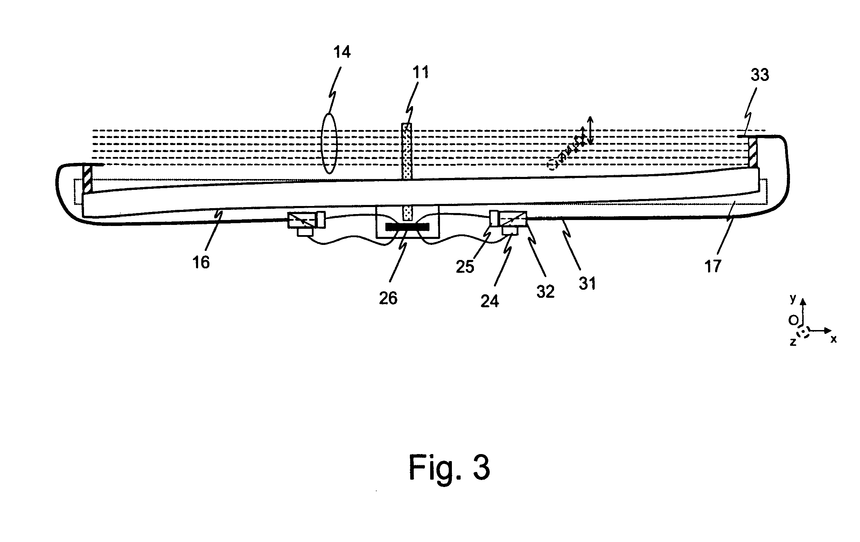

Un mode de réalisation alternatif au mode de réalisation décrit précédemment, illustré schématiquement par la figure 3, consiste à utiliser, pour réaliser la sonde, une fibre optique à maintien de polarisation 31 dont une extrémité 33 est agencée pour occuper une position fixe par rapport à la surface contrôlée 16 et être située dans la zone couverte par la nappe lumineuse 14 de façon à intercepter l'onde lumineuse formant cette nappe. Cette extrémité forme donc un capteur lumineux ponctuel. L'autre extrémité de la fibre optique est quant à elle reliée à un dispositif séparateur de polarisation 32, similaire au dispositif 21 de la figure 2, qui délivre, à partir de l'onde lumineuse transportée par la fibre 31, deux ondes lumineuses présentant des axes de polarisation orthogonaux. Ces deux ondes sont ensuite, comme dans le mode de réalisation précédent, transmises à deux photodétecteurs 24 et 25 et traitées pour déterminer l'amplitude, a, de la déformation subie par la surface à l'endroit considéré.

Comme le mode de réalisation précédent, ce mode de réalisation peut avantageusement être utilisé pour réaliser la mesure de déformation de la surface rayonnante d'une antenne radar. La longueur de la fibre optique à maintien de polarisation 31 peut être définie de façon à ce que l'onde lumineuse captée par l'extrémité de cette fibre optique soit transportée dans une zone extérieure à la zone dans laquelle le champ électromagnétique est présent, à l'arrière du plan rayonnant par exemple. Ce mode de réalisation présente l'avantage particulier de permettre la réalisation de capteur de très faible encombrement. Elle contraint cependant à l'utilisation d'une fibre optique à maintien de polarisation pour conserver l'état de polarisation de l'onde lumineuse captée jusqu'à l'entrée de cette onde dans le dispositif séparateur de polarisation 32 qui se trouve ici distant du point 33 de capture de l'onde lumineuse.

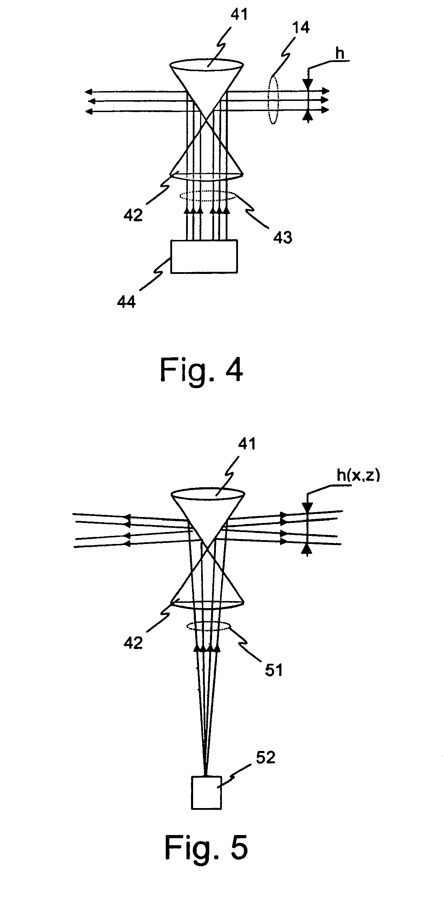

On considère ensuite les figures 4 et 5, qui présentent des illustrations schématiques d'un premier mode de réalisation des moyens 11 pour produire la nappe lumineuse de référence 14. Ce mode de réalisation peut évidemment être intégré dans les modes de réalisation du dispositif décrits précédemment, modes dont les caractéristiques décrites portent plus particulièrement sur les moyens pour capter et traiter l'onde lumineuse formant la nappe 14.

Dans ce premier mode de réalisation, les moyens 11 pour réaliser la nappe optique de référence 14, nappe qui présente un axe de polarisation tournant, comportent un miroir conique 41 associé à un élément de quartz 42 ayant également une forme conique. Les deux éléments 41 et 42 sont agencés de façon à ce que leurs sommets soient placés en regard l'un de l'autre et leurs axes de symétrie confondus. L'élément 42 est constitué par un cristal de quartz dont l'axe optique est confondu avec la hauteur de l'élément.

Du fait du matériau qui le constitue (un cristal de quartz), l'élément 42 a pour fonction connue de créer une rotation de l'axe de polarisation d'un faisceau lumineux qui lui est appliqué, conformément à l'axe de polarisation du cristal. Par ailleurs du fait de sa forme conique particulière et pour un faisceau incident dont l'orientation de l'axe de polarisation est constant, le faisceau produit en sortie de l'élément 42 présente une polarisation dont l'axe tourne de manière continue et monotone du centre du faisceau vers la périphérie.

Selon l'invention le faisceau à axe de polarisation à orientation variable ainsi crée illumine le miroir conique 41 qui transforme ce faisceau en une nappe lumineuse dont l'épaisseur E est fonction du diamètre du faisceau appliqué au miroir et présentant elle-même un axe de polarisation dont la direction varie sur l'épaisseur E.

Les moyens 11 pour réaliser la nappe optique de référence 14 sont associés à une source lumineuse, une source laser de préférence.

Selon une première variante de réalisation, illustrée plus particulièrement par la figure 4, la source lumineuse 44 produit un faisceau laser cylindrique collimaté 43, de rayon R, orienté parallèlement à l'axe de symétrie de la pyramide cylindrique 42. Dans cette première variante, la nappe lumineuse produite est une nappe d'épaisseur E constante. De sorte que, en l'absence de déformation, la nappe lumineuse de référence 14 présente un état de polarisation identique à tous les capteurs placés sur la surface contrôlée. Par suite, une variation donnée de l'état de polarisation correspond pour tous les capteurs à une même amplitude de déformation. L'étalonnage d'ensemble du dispositif consiste donc en l'établissement d'une relation commune à tous les capteurs, qui définit la relation entre la variation constatée de l'état de polarisation et l'amplitude de la déformation correspondante.

Selon une seconde variante de réalisation, illustrée plus particulièrement par la figure 5, la source lumineuse est une source laser divergente 52 placée devant l'élément 42 et qui produit un faisceau conique 51 d'ouverture θ. Dans cette seconde variante, plus simple à réaliser en pratique, la nappe lumineuse 14 produite est alors une nappe dont l'épaisseur E varie en fonction de l'angle θ et de la distance séparant le point de la surface 16 considéré et l'axe du miroir conique 41. De sorte que, en l'absence de déformation, la nappe lumineuse présente à chaque capteur un état de polarisation qui varie en fonction de la position du capteur par rapport à l'axe de symétrie du miroir conique 41. Par suite, une variation donnée de l'état de polarisation correspond à une amplitude de déformation de la surface contrôlée 16 qui diffère suivant la position du capteur ayant permis de constater cette variation. Par suite l'étalonnage de l'ensemble du dispositif selon l'invention consiste à établir pour chaque capteur la relation qui définit le lien entre la variation constaté de l'état de polarisation et l'amplitude de la déformation correspondante à l'endroit où est placé le capteur.

Les figures 4 et 5 illustrent un premier mode de réalisation des moyens 11 pour produire la nappe lumineuse de référence 14. Dans ce mode de réalisation particulier, pris comme exemple non limitatif, on produit un faisceau présentant un gradient radial de polarisation en faisant traverser l'élément de quartz 42, de forme conique, par un faisceau laser 43 ayant un axe de polarisation présentant une direction constante. Un résultat analogue peut être obtenu par différents moyens alternatifs.

Un premier moyen consiste à substituer à l'élément 42 une matrice plane de cristaux liquides, configurée pour produire un faisceau présentant un axe de polarisation tournant à partir d'un faisceau lumineux incident présentant un axe de polarisation dont la direction est constante.

Un autre moyen consiste à substituer à l'élément 42 une lame de matériau micro-ou nano-structurée, construite par gravure d'une lame de silice par exemple, de façon à produire également un faisceau présentant un axe de polarisation tournant à partir d'un faisceau lumineux incident présentant un axe de polarisation dont la direction est constante.

Il est à noter ici, que la variation spatiale de la polarisation (variation selon l'épaisseur E de la nappe créée) peut s'accompagner d'une modulation temporelle de polarisation. Pour ce faire, il est par exemple possible d'associer des valves optiques au dispositif selon l'invention. On rappelle qu'une valve optique est un assemblage cristaux liquides dont la biréfringence est contrôlée par un champ électrique appliqué à la cellule contenant les cristaux liquides. La modulation du champ électrique appliqué produit alors une variation de l'orientation de l'axe de polarisation d'un faisceau lumineux à polarisation rectiligne traversant cette cellule. Le contrôle spatial et temporel de la polarisation permet de réaliser le calibrage du capteur polarimétrique ainsi constitué et donc de renforcer la robustesse du capteur (correction des dérives du capteur dues au vieillissement, déséquilibrage de chaînes d'amplification, etc..).

## Revendications

1. Dispositif pour contrôler les déformations subies par une structure présentant une surface (16) sensiblement plane, comportant:
- des moyens (11) pour produire une nappe lumineuse (14) d'épaisseur E, s'étendant au-dessus de la surface,
- des capteurs d'ondes lumineuses (12) disposés en différents points de la structure, agencés de façon à intercepter l'onde lumineuse constituant la nappe (14) et configurés pour détecter cette onde lumineuse,
**caractérisé en ce que** la nappe lumineuse (14) produite présente un axe de polarisation dont l'orientation varie suivant l'épaisseur E et que chaque capteur est configuré pour transformer l'onde lumineuse captée en deux ondes lumineuses présentant des polarités orthogonales et dont les intensités sont fonction de la polarité de l'onde détectée.

2. Dispositif selon la revendication 1 **caractérisé en ce que** chaque capteur (12) est constitué par une sonde optique passive (21) apte à produire deux ondes lumineuses présentant des polarités orthogonales, séparées spatialement, la sonde étant associée à deux fibres optiques, l'ensemble étant agencé de façon à ce que l'une des fibres optiques transporte une des ondes produites par la sonde et que l'autre fibre transporte l'autre onde produite.

3. Dispositif selon la revendication 2, **caractérisé en ce que** la sonde optique passive est constituée par une lame séparatrice de polarisation.

4. Dispositif selon la revendication 1, **caractérisé en ce que** chaque sonde comporte une fibre optique à maintien de polarisation (31) agencée de façon à intercepter la nappe, associée à une sonde optique passive apte à produire deux ondes lumineuses présentant des polarités orthogonales, séparables spatialement.

5. Dispositif selon l'une des revendications précédentes, **caractérisé en ce que** les moyens (11) pour produire la nappe lumineuse (14), comportent une source (44) émettant un faisceau laser cylindrique (43) sur un élément en quartz (42) ayant la forme d'un cône, suivant une direction parallèle à l'axe optique de cet élément, l'élément en quartz étant réalisé de façon à ce que la hauteur du cône soit parallèle à l'axe optique du matériau, ainsi qu'un miroir conique (41) aligné avec cet élément (42), l'ensemble produisant une nappe lumineuse d'épaisseur E constante sur toute la surface de la structure.

6. Dispositif selon l'une quelconque des revendications 1 à 4, **caractérisé en ce que** les moyens (11) pour produire la nappe lumineuse (14) comportent une source (52) émettant un faisceau laser conique (51) sur la base d'un élément en quartz en forme de cône (42), l'élément en quartz étant réalisé de façon à ce que la hauteur du cône soit parallèle à l'axe optique du matériau, ainsi qu'un miroir conique (41) aligné avec cet élément, l'ensemble produisant une nappe lumineuse dont l'épaisseur E varie en fonction de la distance considérée à l'origine de la nappe.

7. Dispositif selon l'une quelconque des revendications 1 à 4, **caractérisé en ce que** les moyens pour produire la nappe lumineuse, comportent une source (52) émettant un faisceau laser conique (53) sur une matrice plane de cristaux liquides, ainsi qu'un miroir conique (41) aligné avec cet élément, l'ensemble produisant une nappe lumineuse dont l'épaisseur E varie en fonction de la distance considérée à l'origine de la nappe.

8. Dispositif selon l'une quelconque des revendications 1 à 4, **caractérisé en ce que** les moyens pour produire la nappe lumineuse, comportent une source (52) émettant un faisceau laser conique sur une lame de matériau micro/nano structuré, ainsi qu'un miroir conique (41) aligné avec cet élément, l'ensemble produisant une nappe lumineuse dont l'épaisseur E varie en fonction de la distance considérée à l'origine de la nappe.

9. Dispositif selon l'une quelconque des revendications 6 à 8, **caractérisé en ce que** l'agencement de chaque capteur (12) est fonction de sa position sur la surface (16) de la structure.

## Patentansprüche

1. Vorrichtung zur Kontrolle der von einer Struktur erhaltenen Verformungen, die eine etwa ebene Oberfläche (16) aufweist, die aufweist:
- Mittel (11), um eine Lichtwand (14) mit der Dicke E zu produzieren, die sich über der Oberfläche erstreckt,
- Lichtwellensensoren (12), die an verschiedenen Punkten der Struktur angeordnet sind, die derart ausgebildet sind, dass sie die Lichtwelle, die die Wand (14) bildet, abschirmen, und konfiguriert, um diese Lichtwelle zu ermitteln,
**dadurch gekennzeichnet, dass** die produzierte Lichtwand (14) eine Polarisationsachse aufweist, deren Ausrichtung je nach der Dicke E schwankt und dass jeder Sensor konfiguriert ist, um die aufgefangene Lichtwelle in zwei Lichtwellen umzuwandeln, die orthogonale Polaritäten aufweisen und deren Intensitäten von der Polarität der ermittelten Welle abhängen.

2. Vorrichtung nach Anspruch 1, **dadurch gekennzeichnet, dass** jeder Sensor (12) von einer passiven optische Sonde (21) gebildet wird, die imstande ist, zwei Lichtwellen zu produzieren, die orthogonale Polaritäten aufweisen, die räumlich getrennt sind, wobei die Sonde zwei optischen Fasern zugeordnet ist, wobei die Gruppe derart ausgebildet ist, dass eine der optischen Fasern eine der von der Sonde produzierten Wellen transportiert und dass die andere Faser die andere produzierte Welle transportiert.

3. Vorrichtung nach Anspruch 2, **dadurch gekennzeichnet, dass** die passive optische Sonde von einer Polarisationstrennplatte gebildet wird.

4. Vorrichtung nach Anspruch 1, **dadurch gekennzeichnet, dass** jede Sonde eine polarisationserhaltende optischen Faser (31) aufweist, die derart ausgebildet ist, dass die Wand abgeschirmt wird, die einer passiven optischen Sonde zugeordnet ist, die imstande ist, zwei Lichtwellen zu produzieren, die orthogonale Polaritäten aufweisen, die räumlich trennbar sind.

5. Vorrichtung nach einem der vorangehenden Ansprüche, **dadurch gekennzeichnet, dass** die Mittel (11) zur Produktion der Lichtwand (14) eine Quelle (44) aufweisen, die einen zylindrischen Laserstrahl (43) auf ein konisches Quarzelement (42) gemäß einer Richtung parallel zur optischen Achse dieses Elements sendet, wobei das Quarzelement derart hergestellt ist, dass die Höhe des Konus parallel zur optischen Achse des Materials ist, sowie einen konischen Spiegel (41), der mit diesem Element (42) fluchtet, wobei die Gruppe eine Lichtwand der Dicke E produziert, die über die gesamte Oberfläche der Struktur konstant ist.

6. Vorrichtung nach einem der Ansprüche 1 bis 4, **dadurch gekennzeichnet, dass** die Mittel (11) zur Produktion der Lichtwand (14) eine Quelle (52) aufweisen, die einen konischen Laserstrahl (51) auf die Basis eines konischen Quarzelements (42) sendet, wobei das Quarzelement derart hergestellt ist, dass die Höhe des Konus parallel zur optischen Achse des Materials ist, sowie einen konischen Spiegel (41), der mit diesem Element fluchtet, wobei die Gruppe eine Lichtwand produziert, deren Dicke E in Abhängigkeit von der am Ursprung der Wand betrachteten Distanz schwankt.

7. Vorrichtung nach einem der Ansprüche 1 bis 4, **dadurch gekennzeichnet, dass** die Mittel zur Produktion der Lichtwand eine Quelle (52) aufweisen, die einen konischen Laserstrahl (53) auf eine ebene Flüssigkristallmatrix sendet, sowie einen konischen Spiegel (41), der mit diesem Element fluchtet, wobei die Gruppe eine Lichtwand produziert, deren Dicke E in Abhängigkeit von der am Ursprung der Wand betrachteten Distanz schwankt.

8. Vorrichtung nach einem der Ansprüche 1 bis 4, **dadurch gekennzeichnet, dass** die Mittel zur Produktion der Lichtwand eine Quelle (52) aufweisen, die einen konischen Laserstrahl auf eine Platte aus einem mikro-/nanostrukturierten Material sendet, sowie einen konischen Spiegel (41), der mit diesem Element fluchtet, wobei die Gruppe eine Lichtwand produziert, deren Dicke E in Abhängigkeit von der am Ursprung der Wand betrachteten Distanz schwankt.

9. Vorrichtung nach einem der Ansprüche 6 bis 8, **dadurch gekennzeichnet, dass** die Ausbildung jedes Sensors (12) von seiner Position auf der Oberfläche (16) der Struktur abhängt.

## Claims

1. A device for controlling the deformations undergone by a structure having a substantially flat surface (16), comprising:
- means (11) for producing a light sheet (14) of thickness E, extending above said surface;
- light wave sensors (12) disposed at different points on said structure, arranged so as to intercept the light wave constituting said sheet (14) and configured so as to detect said light wave,
**characterised in that** said produced light sheet (14) has a polarisation axis, the orientation of which varies according to the thickness E, and **in that** each sensor is configured so as to convert the captured light wave into two light waves with orthogonal polarities, the intensities of which are a function of the polarity of the detected wave.

2. The device according to claim 1, **characterised in that** each sensor (12) is constituted by a passive optical probe (21) designed to produce two light waves with spatially separated orthogonal polarities, said probe being associated with two optical fibres, the assembly being arranged so that one of said optical fibres carries one of the waves produced by said probe and so that the other fibre carries the other produced wave.

3. The device according to claim 2, **characterised in that** said passive optical probe is constituted by a polarisation separating plate.

4. The device according to claim 1, **characterised in that** each probe comprises a polarisation maintaining optical fibre (31), arranged so as to intercept said sheet, associated with a passive optical probe designed to produce two light waves with spatially separable orthogonal polarities.

5. The device according to any one of the preceding claims, **characterised in that** said means (11) for producing said light sheet (14) comprise a source (44) emitting a cylindrical laser beam (43) over a quartz element (42) in the shape of a cone in a direction parallel to the optical axis of said element, said quartz element being realised so that the height of said cone is parallel to the optical axis of the material, as well as a conical mirror (41) aligned with said element (42), the assembly producing a light sheet of constant thickness E over the whole surface of said structure.

6. The device according to any one of claims 1 to 4, **characterised in that** said means (11) for producing said light sheet (14) comprise a source (52) emitting a conical laser beam (51) over the base of a cone shaped quartz element (42), said quartz element being realised so that the height of the cone is parallel to the optical axis of the material, as well as a conical mirror (41) aligned with said element, the assembly producing a light sheet, the thickness E of which varies as a function of the distance considered at the start of said sheet.

7. The device according to any one of claims 1 to 4, **characterised in that** said means for producing said light sheet comprise a source (52) emitting a conical laser beam (53) over a flat matrix of liquid crystals, as well as a conical mirror (41) aligned with said element, the assembly producing a light sheet, the thickness E of which varies as a function of the distance considered at the start of said sheet.

8. The device according to any one of claims 1 to 4, **characterised in that** said means for producing said light sheet comprise a source (52) emitting a conical laser beam over a plate of micro/nano-structured material, as well as a conical mirror (41) aligned with said element, the assembly producing a light sheet, the thickness E of which varies as a function of the distance considered at the start of said sheet.

9. The device according to any one of claims 6 to 8, **characterised in that** the arrangement of each sensor (12) is a function of its position on said surface (16) of said structure.
